# EUROPÄISCHE PATENTANMELDUNG

(11) **EP 0 653 580 A1**
(43) Veröffentlichungstag der Anmeldung: **17.05.1995**
(21) Anmeldenummer: 94117917.8
(22) Anmeldetag: 14.11.1994
(51) Int. Cl.: F16K 1/24, F16C 3/22

(54) **Klappenventil**

(30) Priorität: 16.11.1993 DE 4339063
(71) Anmelder: Hugo Lahme Gmbh, D-58256 Ennepetal (DE)
(72) Erfinder: Nitsch, Josef Wolfgang, D-58239 Schwerte (DE)
(74) Vertreter: Peerbooms, Rudolf, Dipl.-Phys.

(57) **Zusammenfassung**

Ein Klappenventil weist eine an einer Betätigungswelle (2) angebrachte Klappe (6) auf, die beim Öffnen des Ventils durch Drehen der mindestens einen exzentrischen Abschnitt (4) aufweisenden Betätigungswelle (2) zunächst vom Ventilsitz in eine Freihubstellung abgehoben und anschließend in ihre offene Stellung geschwenkt wird, wobei die Klappe (6) auf dem exzentrischen Abschnitt (4) gelagert und durch mindestens einen am exzentrischen Abschnitt (4) angeordneten Mitnehmerstift (18) bewegt wird.

Damit das Klappenventil mit geringem Aufwand herstellbar und seine Betätigungswelle (2) problemlos abdichtbar ist, ist vorgesehen, daß die Betätigungswelle (2) aus zwei äußeren Wellenteilen (11, 12), die von innen her in Lagerdurchbrüche des Ventilgehäuses (1) einsetzbar sind, und aus einem mittleren Wellenteil (13) aufgebaut ist und daß die Wellenteile (11, 12, 13) an ihren aneinander angrenzenden Stirnenden jeweils eine Exzenterscheibenhälfte (14/15, 16/17) tragen, die unter Einspannung je eines Mitnehmerstiftes (18) zusammengespannt sind.

## Beschreibung

Die Erfindung betrifft ein Klappenventil mit einer an einer aus dem Ventilgehäuse herausragenden Betätigungswelle angebrachten Klappe, die beim Öffnen des Ventils durch Drehen der mindestens einen exzentrischen Abschnitt aufweisenden Betätigungswelle zunächst vom Ventilsitz in eine Freihubstellung abgehoben und anschließend um eine zur Drehachse der Betätigungswelle parallele Drehachse in ihre offene Stellung geschwenkt wird, wobei die Klappe auf dem exzentrischen Abschnitt gelagert und während der ersten Freihub-Öffnungsphase um den exzentrischen Abschnitt drehbar ist, wobei die Drehachse der Klappe außermittig, d.h. versetzt neben der zur Drehachse der Betätigungswelle parallelen Achsmittelebene der Klappe, angeordnet ist und wobei mindestens ein am exzentrischen Abschnitt angeordneter Mitnehmerstift mit an der Klappe angeordneten Mitnehmeranschlägen zum Schwenken der Klappe in ihre Offenstellung zusammenwirkt.

Ein derartiges Klappenventil ist durch die BE-PS 897 145 bekannt. Bei diesem bekannten Klappenventil wie auch bei einem ähnlichen , durch die US-PS 1 213 513 bekannten Klappenventil, ist eine einstückige Betätigungswelle vorgesehen, die durch einen Gehäusedurchbruch in das rohrförmige Ventilgehäuse eingesteckt wird, wonach der exzentrische Abschnitt, der dort aus einem die durchgesteckte Welle zunächst nur lose umschließenden Ring besteht, in radialer Richtung an der Welle festgespannt wird. Da insbesondere bei großen Klappen und hohen Fluidumdrücken erhebliche Kräfte von der Betätigungswelle auf den exzentrischen Abschnitt übertragen werden müssen, läßt sich eine radiale Festspannung mittels einer oder mehrerer Radialschrauben nur bei einer verhältnismäßig großen Dimensionierung der Welle und des exzentrischen Abschnittes erreichen, wodurch allerdings der Strömungswiderstand und der Fertigungsaufwand erhöht werden. Zudem sind bei den bekannten Klappenventilen große radiale Erweiterungsräume beim Ventilgehäuse erforderlich, um die Klappe auf der Welle montieren zu können und um einen ausreichenden Freiraum für die betriebsmäßige Schwenkbewegung der Klappe sicherzustellen. Hierdurch weisen die bekannten Klappenventile eine axiale Länge auf, die ein Mehrfaches des Klappendurchmessers beträgt. Zudem treten, insbesondere wenn wie beim Klappenventil nach der US-PS 1 213 513 eine zusätzliche Öffnung im Ventilgehäuse zum Einbringen der Klappe vorgesehen ist, erhebliche Dichtprobleme auf.

Bei einem durch die DE-AS 22 47 789 bekannten Klappenventil werden der Klappe die erforderlichen Schwenkbewegungen durch Kulissenführungen aufgezwungen, wobei eine erste Kulissenführung die Schwenkbewegung bis zur Freihubstellung und eine zweite Kulissenführung die Schwenkbewegung bis zur Offenstellung der Klappe steuern. Die Kulissen sind in einem in das Ventilgehäuse eingebauten mehrteiligen Einsatz ausgebildet, der von der Betätigungswelle durchsetzt ist. Derartige Wandeinsätze sind jedoch in der Herstellung und in der Montage aufwendig und erbringen zudem Abdichtprobleme.

Der Erfindung liegt die Aufgabe zugrunde, ein insbesondere für Schwimmbadfilterinstallationen geeignetes Klappenventil zu schaffen, welches mit geringerem Aufwand herstellbar ist und bei dem die Abdichtung der Betätigungswelle problemlos mittels üblicher Dichtringe, insbesondere O-Ringe, vorgenommen werden kann.

Ausgehend von einem Klappenventil der eingangs genannten Art, ist zur Lösung dieser Aufgabe erfindungsgemäß vorgesehen, daß die Betätigungswelle aus zwei äußeren Wellenteilen, die von innen her in Lagerdurchbrüche des Ventilgehäuses einsetzbar sind, und aus einem mittleren Wellenteil aufgebaut ist und daß die Wellenteile an ihren aneinander angrenzenden Stirnenden jeweils eine Exzenterscheibenhälfte tragen, die unter Einspannung je eines der Mitnehmerstifte zusammengespannt sind.

Bei der Ausführungsform nach der Erfindung liegt der besondere Vorteil vor, daß die exzentrischen Abschnitte bereits vor dem Zusammenbau des Klappenventils an den Wellenteilen angeordnet sind und eine nachträgliche Festspannung an der Betätigungswelle nicht mehr erforderlich ist. Beim Zusammenbau werden die beiden äußeren Wellenteile in die Lagerdurchbrüche des Ventilgehäuses eingesteckt und wird anschließend der die Klappe tragende mittlere Wellenteil zwischen die äußeren Wellenteile eingefügt und mit diesem lediglich in axialer Richtung zusammengespannt. Die an den Enden der Wellenteile angeordneten Exzenterscheibenhälften erlauben wegen ihrer relativ großen Stirnflächen eine stabile axiale Festspannung, wobei die zwischen ihnen jeweils eingespannten Mitnehmerstifte zusätzlich die Drehkopplung zwischen den Wellenteilen sichern. Das Klappenventil nach der Erfindung kann mit kurzer Axialabmessung und mit einem strömungsgünstigen Querschnitt gebaut und in einfacher Weise montiert werden, zumal die Wellenabdichtung mittels üblicher O-Ringe vorgenommen werden kann.
Durch die außermittige Drehlagerung übt das anströmende Medium auf die Klappe ein Drehmoment aus, welches während der ersten Öffnungsphase, bei der die Klappe noch lose oder weitgehend lose auf dem exzentrischen Abschnitt der Betätigungswelle drehbar ist, die Schwenkbewegung derart mitbestimmt, daß die Klappe zunächst unter Schrägstellung vom Ventilsitz einseitig weggeschwenkt wird, bis die Mitnehmeranschläge aufeinander auftreffen, die die Klappe in eine Freihubstellung, in der sie mit Abstand und parallel zum Ventilsitz liegt, bewegen und nachfolgend in die offene Stellung schwenken. Beim Schließen der Klappe bewirkt im wesentlichen das vom Medium ausgeübte Drehmoment die Rückschwenkung der Klappe bis etwa in die vorerwähnte Freihubstellung, aus der heraus dann ohne Mitwirkung der Mitnehmeranschläge die Klappe wieder bis in die Schließstellung überführt wird. Die Erfindung erbringt dabei die besonderen Vorteile, daß im Ventilgehäuse lediglich Lagerdurchbrüche für die Betätigungswelle vorgesehen werden müssen und somit der konstruktive Aufwand erheblich vereinfacht ist und Dichtungsprobleme entfallen. Die einfachen Bewegungsabläufe gestatten auch eine elektrische oder pneumatische Fernverstellung.

Gemäß einer speziellen Ausführungsform der Erfindung kann hierbei vorgesehen werden, daß auch die Betätigungswelle außermittig im rohrförmigen Ventilgehäuse angeordnet ist und daß in der Schließstellung die Drehachse der Klappe zwischen der horizontalen Achsmittelebene der Klappe und der hierzu parallelen, die Betätigungswelle enthaltenden Ebene liegt. Dabei kann nach weiteren Merkmalen der Erfindung vorgesehen werden, daß die Klappe während der ersten Öffnungsphase über einen Drehwinkel der Betätigungswelle von etwa 90^{o} hinweg lose drehbar ist und während etwa weiterer 90^{o} Drehung der Betätigungswelle durch die Mitnehmeranschläge in die Offenstellung geschwenkt wird. Durch diese Maßnahmen wird der Druck des strömenden Mediums optimal für eine Mitwirkung an den erforderlichen Schwenkbewegungen der Klappe ausgenutzt.

Ferner kann in der Schließstellung die durch die Drehachse der Betätigungswelle und durch die Drehachse der Klappe aufgespannte Ebene unter einem Winkel von etwa 45^{o} gegenüber der Dichtungsebene geneigt sein. Hierdurch wird erreicht, daß die Klappe in der Freihubstellung koaxial zum Ventilsitz ausgerichtet ist und beim Verschwenken nur eine geringe seitliche Verlagerung erfährt.

In Weiterbildung der Erfindung ist vorteilhafterweise zwischen dem exzentrischen Abschnitt und der Klappe ein solcher Reibschluß vorgesehen, daß die Klappe, falls sie durch das Strömungsmedium nicht belastet ist, von dem exzentrischen Abschnitt mitgenommen wird. Hierdurch wird auch im Montagebetrieb der erforderliche Bewegungsablauf sichergestellt. Alternativ kann durch eine zwischen Klappe und Welle eingespannte Druckfeder die gewünschte Kopplung erreicht werden.

Bei einer bevorzugten Ausführungsform der Erfindung ist vorgesehen, daß der exzentrische Abschnitt im Abstand von der Ventilgehäusewandung angeordnet ist und aus zwei Exzenterscheiben besteht, auf denen die Klappe mittels zweier Lagerböcke drehbar gelagert ist, und daß die Exzenterscheiben jeweils mit einem radialen Mitnehmerstift in einen Umfangsschlitz ihres Zugehörigen Lagerbockes eingreifen.

Der mittlere Wellenteil besitzt vorteilhafterweise ein abgeflachtes Strömungsprofil, das in der Offenstellung der Klappe mit seiner Längsachse in Strömungsrichtung liegt.

Ferner kann der Erfindung zufolge vorgesehen werden, daß die Mitnehmerstifte an ihren in die Umfangsschlitze der Lageraugen eingreifenden Enden gegen die Schlitzwandung unter Erhöhung des Reibschlusses aufspreizbar sind.

Schließlich kann der Erfindung zufolge vorgesehen werden, daß das Ventilgehäuse einen kegeligen Ventilsitz aufweist und daß die Ventilsitz-Dichtung in die kegelige Dichtfläche der Klappe eingelassen ist.

Diese Ausführungsform ist bei der Erfindung ermöglicht durch die exzentrische Anordnung der Betätigungswelle im Ventilgehäuse, durch die exzentrische Drehlagerung der Klappe und durch den darauf abgestimmten Exzenterhub der Klappe, wodurch die Klappe beim Schließen nur so geringe Querbewegungen ausführt, daß sie in den kegeligen Ventilsitz einschwenken und bis in eine Dichtstellung geführt werden kann.

Der Gegenstand der Erfindung wird im folgenden anhand zweier in der Zeichnung dargestellter Ausführungsbeispiele näher beschrieben. In der Zeichnung zeigen:
- Fig. 1: in einem Diametralschnitt ein Klappenventil nach der Erfindung,
- Fig. 2: in vergrößertem Maßstab das Klappenventil in einem Axialschnitt gemäß der Schnittebene II-II in Fig. 1,
- Fig. 3: das Klappenventil in einem Axialschnitt gemäß der Schnittebene III-III in Fig. 1,
- Fig. 4: in Seitenansicht die Betätigungswelle des Klappenventiles,
- Fig. 5: einen Schnitt gemäß der Linie V-V in Fig. 4,
- Fig. 6 bis 12: das Klappenventil in sieben aufeinanderfolgenden Stellungen,
- Fig. 13 bis 15: eine abgewandelte Ausführungsform des Klappenventiles nach der Erfindung in drei verschiedenen Schwenkstellungen und
- Fig. 16: in einem Teilschnitt den kegeligen Ventilsitz des Klappenventiles nach den Fig. 13 bis 15.

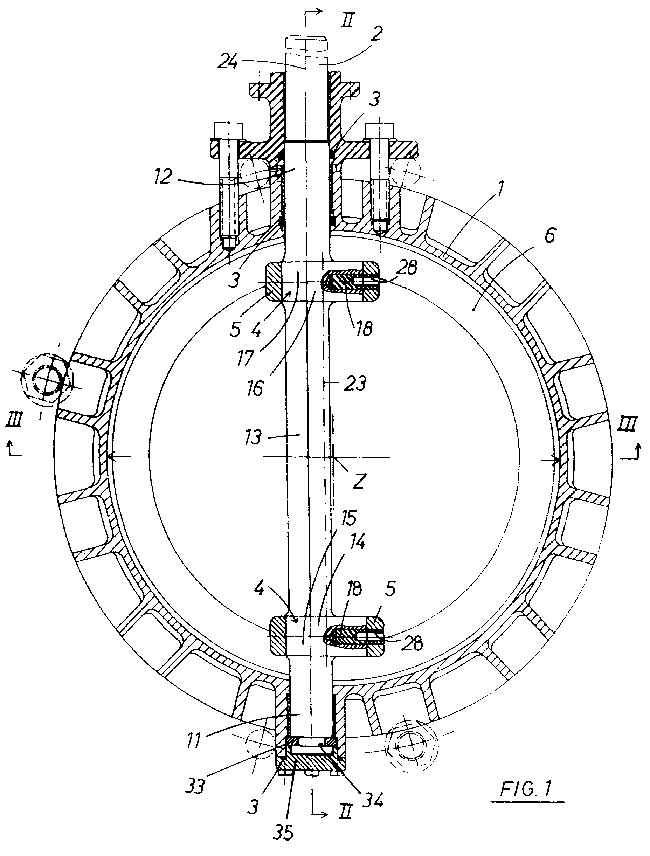

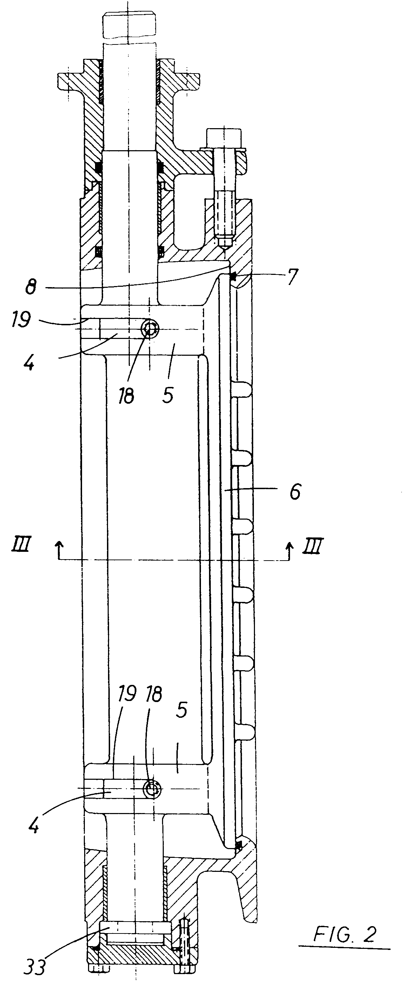

Die Figuren 1 bis 3 zeigen das Klappenventil in geschlossener Stellung. Es umfaßt ein rohrförmiges Ventilgehäuse 1, in welchem eine Betätigungswelle 2 außermittig, d.h. versetzt neben der Mittelachse Z, gelagert ist, wobei die Betätigungswelle 2 durch O-Ringe 3 in den Wanddurchführungen und Verschlußkappen abgedichtet sind. Die Welle 2 ist mit zwei exzentrischen Abschnitten 4 versehen, die im Abstand von der Gehäuseinnenwandung angeordnet sind und auf denen mittels zweier Lagerböcke 5 eine scheibenförmige Klappe 6 drehbar gelagert ist. Beim Ausführungsbeispiel nach den Fig. 1 bis 3 liegt die Klappe 6 an einem, mit einer eingelassenen Dichtung 7 versehenen, ebenen Ventilsitz 8 des Gehäuses an.

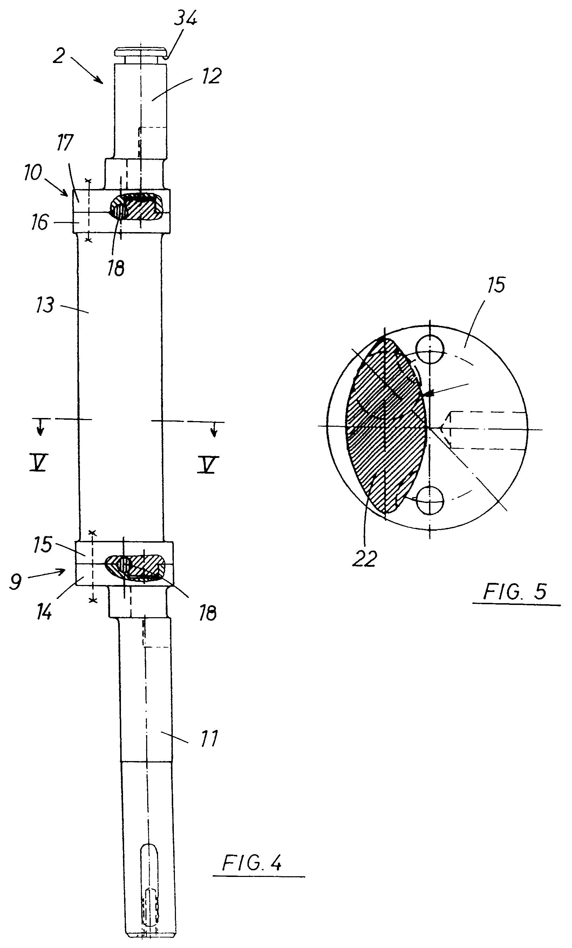

Die exzentrischen Abschnitte 4 sind jeweils als eine Exzenterscheibe 9, 10, ausgebildet, vergleiche auch Fig. 4 und 5. Die Betätigungswelle 2 besteht aus zwei äußeren Wellenteilen 11 und 12 und einem mittleren Wellenteil 13, die jeweils an ihren aneinander angrenzenden Enden eine Hälfte 14, 15 bzw. 16, 17 der Exzenterscheiben 9 und 10 aufweisen und unter Einspannung je eines Radialstiftes 18 zusammengeschraubt sind. Die Stifte 18 ragen mit ihrem freien Ende jeweils in einen Umfangsschlitz 19 der Lagerböcke 5 hinein. Die Schlitze 19 erstrecken sich um etwas mehr als 90^{o}, und die Schlitzenden 20, 21 und die Stifte 18 bilden zusammenwirkende Mitnehmeranschläge, welche die relative Verschwenkbarkeit der Klappe 6 gegenüber der Betätigungswelle 2 begrenzen. Der mittlere Wellenteil 13 weist ein längliches Strömungsprofil 22 auf, vergleiche auch Fig. 5.

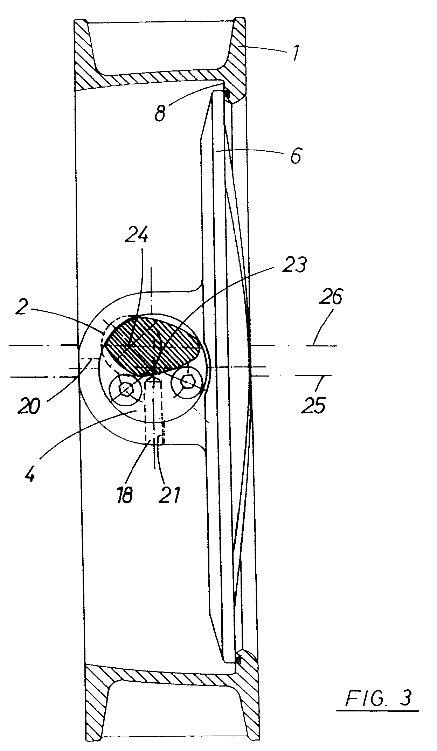

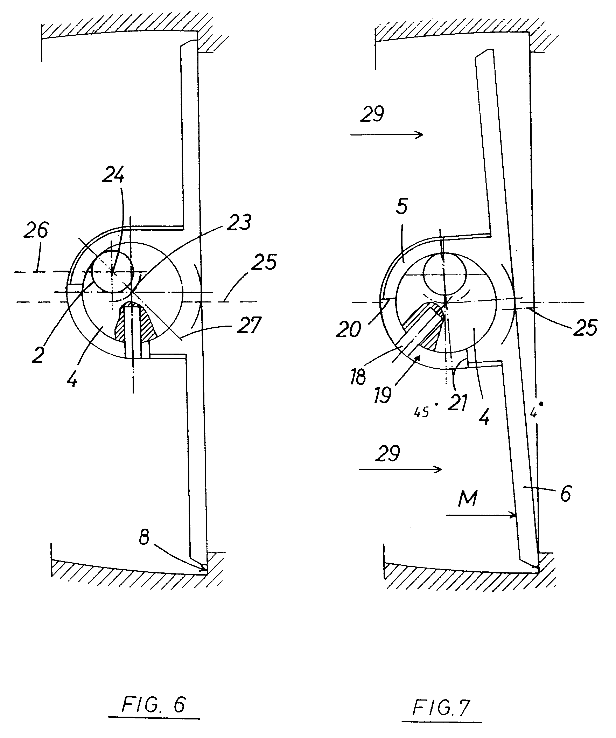

Wie beispielsweise aus den Fig. 3 und 6 ersichtlich ist, liegt die Drehachse 23 der Klappe 6, d. h. das Zentrum der Lagerböcke 5, außermittig; d. h. die Drehachse 23 liegt versetzt neben der zur Drehachse 24 der Betätigungswelle 2 parallelen Achsmittelebene 25 der Klappe 6. In der Schließstellung liegt die Drehachse 23 der Klappe 6 zwischen der horizontalen Achsmittelebene 25 der Klappe 6 und der hierzu parallelen, die Drehachse 24 der Betätigungswelle 2 enthaltendenden Ebene 26. In der Schließstellung liegt ferner die durch die Drehachse 24 der Betätigungswelle 2 und durch die Drehachse 23 der Klappe 6 aufgespannte Ebene 27 unter einem Winkel von etwa 45^{o} gegenüber der Ebene des Ventilsitzes 8.

Wie aus Fig. 1 ersichtlich ist, sind die aus elastischem Material bestehenden Mitnehmerstifte 18 an ihren äußeren Enden 28 mit einer Einführöffnung für eine Spreizschraube versehen, mittels der der Reibschluß zwischen den Stiften 18 und den Wandungen der Schlitze 19 in den Lagerböcken 5 eingestellt werden kann. Die axiale Einbaulage der Betätigungswelle 2 ist durch eine Scheibe 33 gesichert, die in eine Umfangsnut 34 der Welle 2 spielarm eingreift und ihrerseits durch einen am Gehäuse 1 befestigten Abschlußdeckel 35 lagegesichert ist. Bei der Scheibe 33 kann es sich um eine mit einem Aufschubschlitz versehene einstückige Scheibe oder auch um zwei seitlich in die Nut 34 eingesetzte Halbringe handeln. Die Klappe 6 ist über die in die Radialschlitze 19 eingreifenden Radialstifte 18 im Ventilgehäuse 1 in axialer Richtung zentriert.

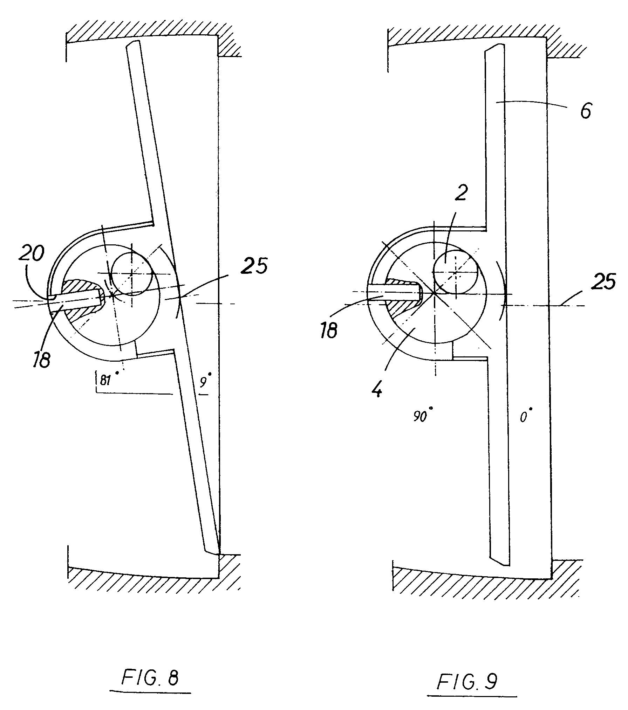

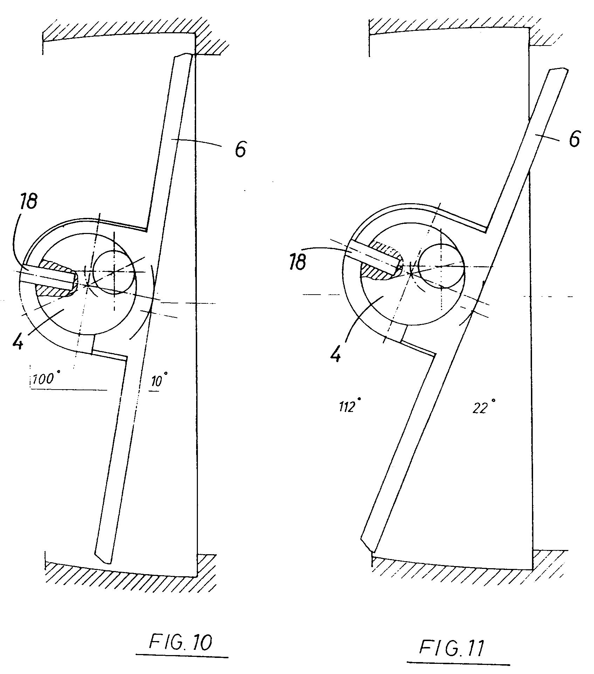

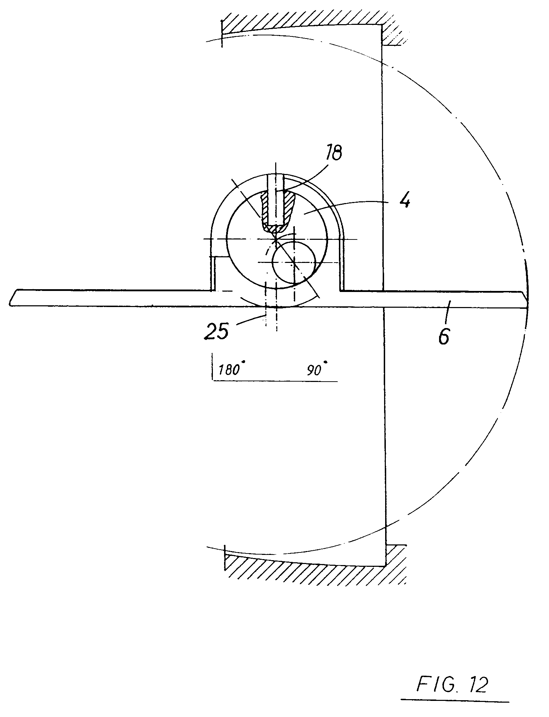

Die Fig. 6 bis 12 veranschaulichen die Arbeitsweise des Klappenventiles. In der Schließstellung nach Fig. 6 liegt die Betätigungswelle 2 etwa im vierten Quadranten des exzentrischen Abschnittes 4. Bei einer Drehung der Betätigungswelle 2 um etwa 45^{o} im Uhrzeigersinn wird die Klappe 6 nach links in die in Fig. 7 gezeigte Stellung geschwenkt, wobei die Klappe 6 aufgrund des vom Strömungsmedium 29 ausgeübten Drehmomentes M unten zunächst in Anlage am Ventilsitz 8 verbleibt und der Mitnehmerstift 18 innerhalb des Schlitzes des Lagerbockes 5 verschwenkt wird. Bei einer Drehung um etwa 81^{o} (vergleiche Fig. 8) trifft der Mitnehmerstift 18 auf das Ende 20 des Schlitzes auf, wonach die Klappe 6 nunmehr vom Stift 18 mitgenommen wird und bei einer Drehung der Betätigungswelle auf 90^{o} in die in Fig. 9 gezeigte Freihubstellung gelangt. Bei einer weiteren Drehung der Betätigungswelle 2 um weitere 90^{o} gelangt die Klappe 6 über die Zwischenstellungen nach den Fig. 10 und 11 in ihre Offenstellung nach Fig. 12, in welcher die Klappe durch den Reibschluß zwischen den Stiften 18 und den Schlitzwandungen in den Lagerböcken 5 lagegesichert ist. Die offene Stellung der Klappe 6 kann auch dadurch zusätzlich gesichert werden, daß die Klappe nur in eine Stellung von etwas weniger als 180^{o} geschwenkt wird, so daß das strömende Medium auch in der Offenstellung noch ein Drehmoment auf die Klappe 6 ausübt, das von den Stiften 18 abgefangen wird.

Bei der Schließbewegung wird die Klappe 6 zunächst durch ihren Reibschluß mit den Lagerböcken 5 etwas im Gegenuhrzeigersinn verdreht, wonach dann das vom Druckmedium wieder ausgeübte Drehmoment die Klappe im Gegenuhrzeigersinn belastet und dafür sorgt, daß die Klappe bei den ersten 90^{o} Rückdrehung der Betätigungswelle jeweils den Stiften 18 folgt und sich wieder gerade stellt, bis die Stellung nach Fig. 8 bzw. Fig. 7 erreicht ist, bei der die Klappe wieder mit ihrem unteren Rand an den Ventilsitz anschlägt. Bei der restlichen Rückwärtsdrehung der Welle 2 schwenken dann die Stifte 18 wieder in die Stellung nach Fig. 4 zurück, in der sie wieder an den Schlitzenden 21 anliegen.

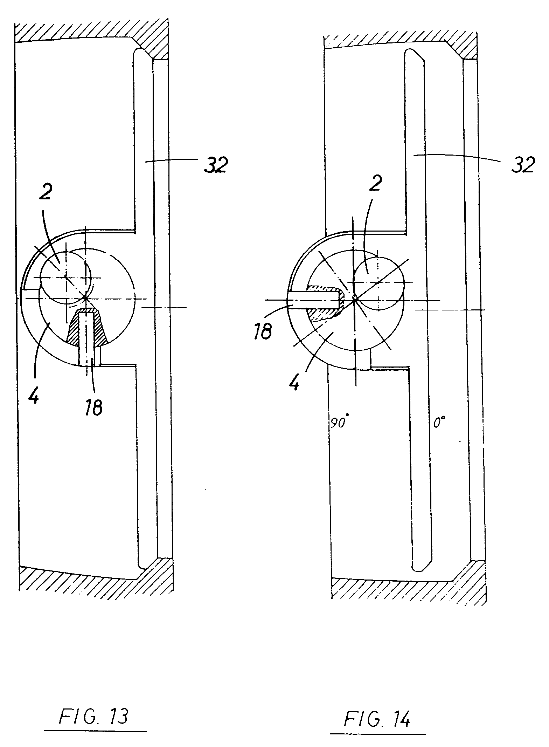

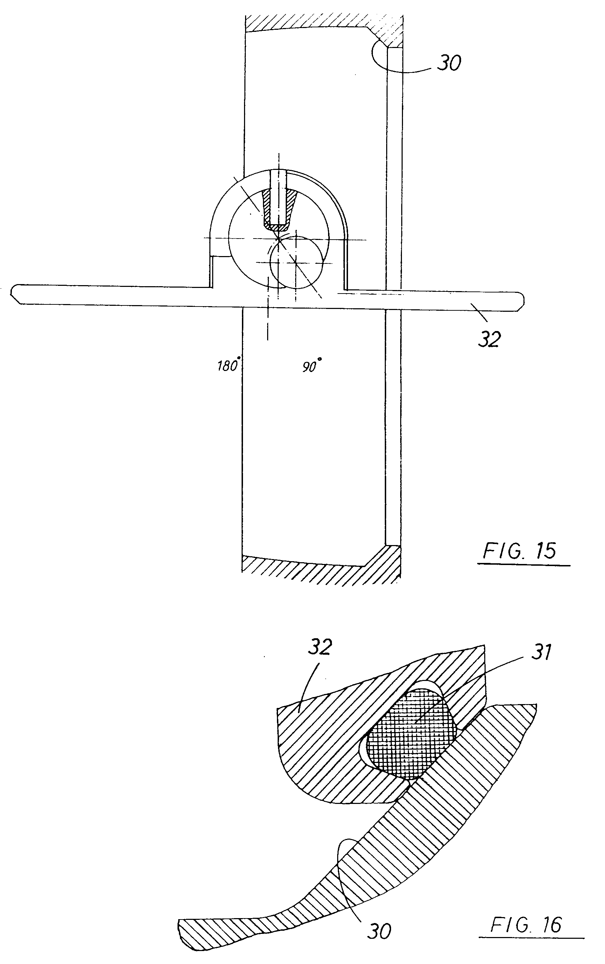

Die Fig. 13 bis 16 veranschaulichen eine zweite Ausführungsform, bei welcher im Unterschied zur ersten Ausführungsform ein kegeliger Ventilsitz 30 vorgesehen ist und die Ventilsitz-Dichtung 31 in die kegelige Dichtfläche der Klappe 32 eingelassen ist.

### Bezugszeichenliste

- 1: rohrförmiges Ventilgehäuse
- 2: Betätigungswelle
- 3: O-Ringe
- 4: exzentrische Abschnitte
- 5: Lagerböcke
- 6: scheibenförmige Klappe
- 7: Dichtung
- 8: Ventilsitz
- 9: Exzenterscheibe
- 10: Exzenterscheibe
- 11: äußerer Wellenteil
- 12: äußerer Wellenteil
- 13: mittlerer Wellenteil
- 14: Hälfte
- 15: Hälfte
- 16: Hälfte
- 17: Hälfte
- 18: Radialstifte
- 19: Umfangsschlitze
- 20: Schlitzende
- 21: Schlitzende
- 22: Strömungsprofile
- 23: Drehachse der Klappe
- 24: Drehachse der Betätigungswelle
- 25: Achsmittelebene
- 26: Ebene
- 27: Ebene durch 23, 24
- 28: äußere Enden von 18
- 29: Strömungsmedium
- 30: kegeliger Ventilsitz
- 31: Ventilsitz-Dichtung
- 32: Klappe
- 33: Scheibe
- 34: Umfangsnut
- 35: Abschlußdeckel
- Z: Mittelachse von 1 und 6
- M: Drehmoment

## Patentansprüche

1. Klappenventil mit einer an einer aus dem Ventilgehäuse (1) herausragenden Betätigungswelle (2) angebrachten Klappe (6), die beim Öffnen des Ventils durch Drehen der mindestens einen exzentrischen Abschnitt (4) aufweisenden Betätigungswelle (2) zunächst vom Ventilsitz (8) in eine Freihubstellung abgehoben und anschließend um eine zur Drehachse (24) der Betätigungswelle (2) parallele Drehachse (23) in ihre offene Stellung geschwenkt wird, wobei die Klappe (6) auf dem exzentrischen Abschnitt (4) gelagert und während der ersten Freihub-Öffnungsphase um den exzentrischen Abschnitt (4) drehbar ist, wobei die Drehachse (23) der Klappe (6) außermittig, d. h. versetzt neben der zur Drehachse (24) der Betätigungswelle (2) parallelen Achsmittelebene (25) der Klappe (6), angeordnet ist und wobei mindestens ein am exzentrischen Abschnitt (4) angeordneter Mitnehmerstift (18) mit an der Klappe (6) angeordneten Mitnehmeranschlägen (20, 21) zum Schwenken der Klappe (6) in ihre Offenstellung zusammenwirkt, dadurch gekennzeichnet, daß die Betätigungswelle (2) aus zwei äußeren Wellenteilen (11, 12), die von innen her in Lagerdurchbrüche des Ventilgehäuses (1) einsetzbar sind, und aus einem mittleren Wellenteil (13) aufgebaut ist und daß die Wellenteile (11, 12, 13) an ihren aneinander angrenzenden Stirnenden jeweils eine Exzenterscheibenhälfte (14/15, 16/17) tragen, die unter Einspannung je eines Mitnehmerstiftes (18) zusammengespannt sind.

2. Klappenventil nach Anspruch 1, dadurch gekennzeichnet, daß die Betätigungswelle (2) außermittig im rohrförmigen Ventilgehäuse (1) angeordnet ist und daß in der Schließstellung die Drehachse (23) der Klappe (6) zwischen der horizontalen Achsmittelebene (25) der Klappe (6) und der hierzu parallelen, die Drehachse (24) der Betätigungswelle (2) enthaltenden Ebene (26), liegt.

3. Klappenventil nach den Ansprüchen 1 und 2, dadurch gekennzeichnet, daß die Klappe (6) während der ersten Öffnungsphase über einen Drehwinkel der Betätigungswelle (2) von etwa 90^{o} hinweg lose drehbar ist und während etwa weiterer 90^{o} Drehung der Betätigungswelle (2) durch die Mitnehmeranschläge (18, 20, 21) in die Offenstellung geschwenkt wird.

4. Klappenventil nach den Ansprüchen 1 bis 3, dadurch gekennzeichnet, daß in der Schließstellung die durch die Drehachse (24) der Betätigungswelle (2) und durch die Drehachse (23) der Klappe (6) aufgespannte Ebene (27) unter einem Winkel von etwa 45^{o} gegenüber der Ebene des Ventilsitzes (8) geneigt ist.

5. Klappenventil nach den Ansprüchen 1 bis 4, dadurch gekennzeichnet, daß zwischen dem exzentrischen Abschnitt (4) und der Klappe (6) ein solcher Reibschluß besteht, daß die Klappe (6), falls sie durch das Strömungsmedium nicht belastet ist, von dem exzentrischen Abschnitt (4) mitgenommen wird.

6. Klappenventil nach den Ansprüchen 1 bis 5, dadurch gekennzeichnet, daß der exzentrische Abschnitt (4) im Abstand von der Wandung des Ventilgehäuses (1) angeordnet ist und aus zwei Exzenterscheiben (9, 10) besteht, auf denen die Klappe (6) mittels zwei er Lagerböcke (5) drehbar gelagert ist, und daß die Exzenterscheiben (9, 10) jeweils mit einem radialen Mitnehmerstift (18) in einen Umfangsschlitz (19) ihres zugehörigen Lagerbockes (5) eingreifen.

7. Klappenventil nach Anspruch 6, dadurch gekennzeichnet, daß der mittlere Wellenteil (13) ein abgeflachtes Strömungsprofil (22) besitzt.

8. Klappenventil nach den Ansprüchen 1 bis 7, dadurch gekennzeichnet, daß die Mitnehmerstifte (18) an ihren in die Umfangsschlitze (19) der Lagerböcke (5) eingreifenden Enden gegen die Schlitzwandung unter Erhöhung des Reibschlusses aufspreizbar sind.

9. Klappenventil nach einem oder mehreren der Ansprüche 1 bis 8, dadurch gekennzeichnet, daß die axiale Einbaulage der Betätigungswelle (2) im Ventilgehäuse (1) durch eine Scheibe (33) gesichert ist, die in eine Umfangsnut (34) der Betätigungswelle (2) spielarm eingreift und ihrerseits durch einen am Gehäuse (1) befestigten Abschlußdeckel (35) lagegesichert ist, und daß die Klappe (6) über die in die Radialschlitze (19) eingreifenden Radialstifte (18) in axialer Richtung zentriert ist.

10. Klappenventil nach einem oder mehreren der Ansprüche 1 bis 9, dadurch gekennzeichnet, daß das Ventilgehäuse einen kegeligen Ventilsitz (30) aufweist und daß die Ventilsitz-Dichtung (31) in die kegelige Dichtfläche der Klappe (32) eingelassen ist.
